# EUROPÄISCHE PATENTSCHRIFT

(11) **EP 2 126 537 B1**
(45) Veröffentlichungstag und Bekanntmachung des Hinweises auf die Patenterteilung: **15.08.2012**
(21) Anmeldenummer: 08716182.4
(22) Anmeldetag: 03.03.2008
(51) Int. Cl.: B60C 25/00, G01M 1/04

(54) **SPANNVORRICHTUNG**
CLAMPING DEVICE
DISPOSITIF DE SERRAGE

(30) Priorität: 02.03.2007 DE 102007010629; 22.03.2007 DE 102007014479
(43) Veröffentlichungstag der Anmeldung: 02.12.2009
(73) Patentinhaber: Haweka AG, 30938 Burgwedel (DE)
(72) Erfinder: WARKOTSCH, Dirk, 30938 Burgwedel (DE)
(74) Vertreter: Gesthuysen, von Rohr & Eggert
(86) Internationale Anmeldenummer: PCT/EP2008/001662
(87) Internationale Veröffentlichungsnummer: WO 2008/107143

(56) Entgegenhaltungen:
- DE-A1- 2 616 945
- US-A- 3 916 971
- US-A1- 2005 076 519
- US-A1- 2005 275 278

## Beschreibung

Die Erfindung betrifft eine Spannvorrichtung zum Aufspannen eines Fahrzeugrades auf eine Welle einer Auswuchtmaschine, mit einem Spannflansch und mit einer Mehrzahl von Zentrierbolzen, wobei der Spannflansch eine Mehrzahl von Ausnehmungen zur Aufnahme der Zentrierbolzen aufweist und wobei jeder Zentrierbolzen mit einem Einsteckbereich lösbar in eine Ausnehmung einsteckbar ist. Darüber hinaus betrifft die vorliegende Erfindung einen Spannflansch und einen Zentrierbolzen, jeweils ausgebildet zur Verwendung bei einer Spannvorrichtung der vorgenannten Art.

Eine Spannvorrichtung der vorgenannten Art ist beispielsweise aus der EP 0 738 885 A2 bekannt, die zum Aufspannen von Rädern unterschiedlicher Typen von Kraftfahrzeugen auf eine Welle einer Auswuchtmaschine dient. Die bekannte Spannvorrichtung weist eine zentrale Führungsbohrung in dem Spannflansch zur axialen Führung des Spannflansches auf der Welle der Auswuchtmaschine auf und ist mit wenigstens zwei in dem Spannflansch angeordneten Gruppen von achsparallelen Zentrierbohrungen versehen, die auf verschiedenen Kreisen unterschiedlichen Durchmessers und/oder in unterschiedlicher Zahl und im gleichen Umfangsabstand angeordnet sind. Die Lochanordnungen entsprechen dabei der Lochanordnung in den Felgen von Rädern unterschiedlicher Typen von Kraftfahrzeugen. Außerdem weist die bekannte Spannvorrichtung in die Zentrierbohrungen des Spannflansches einsetzbare Zentrierbolzen auf, an deren freien Enden Zentrierkonen vorgesehen sind.

Um ein Fahrzeugrad auf die Welle der Auswuchtmaschine aufzuspannen, werden zunächst die Zentrierbolzen in eine Gruppe von Bohrungen in dem Spannflansch eingesetzt, deren Anordnung der Lochanordnung in der Felge eines aufzuspannenden Rades entspricht. Dann wird das Rad mit der Felge auf die Welle der Auswuchtmaschine geschoben, bis die Felge gegen ein auf der Welle gelagertes Anschlagteil anliegt. Das Anschlagteil greift dabei in das zentrale Loch in der Felge des aufzuspannenden Rades ein. Danach wird der Spannflansch mit der zentralen Führungsbohrung so weit auf die Welle der Auswuchtmaschine aufgeschoben, bis die Zentrierkonen der Zentrierbolzen in die Befestigungslöcher in der Felge des Rades eingreifen. Anschließend wird eine Spannmutter auf ein auf der Welle der Auswuchtmaschine vorgesehenes Gewinde aufgeschraubt, bis die Rückseite der Felge gegen einen Anlageflansch der Welle der Auswuchtmaschine zur Anlage kommt. Dadurch wird die Felge in einer Ebene senkrecht zur Achse der Auswuchtmaschine ausgerichtet. Durch die in die Zentrierlöcher der Felge eingreifenden Zentrierkonen der Zentrierbolzen erfolgt eine radiale Zentrierung, wobei der Spannflansch dazu beiträgt, das Auftreten einer dynamischen Unwucht beim Auswuchtvorgang zu verhindern.

Um einen anderen Typ eines Fahrzeugrades aufzuspannen, müssen die Zentrierbolzen aus den Zentrierbohrungen in dem Spannflansch herausgezogen und in eine andere Gruppe von Zentrierbohrungen in dem Spannflansch eingesetzt werden, deren Anordnung der Anordnung der Zentrierlöcher in der Felge des neuen Radtyps entspricht. Die Zentrierbolzen und die korrespondierenden Bohrungen in dem Spannflansch müssen mit hoher Präzision gefertigt sein, um im wesentlichen spielfrei eine einwandfreie Montage der auszuwuchtenden Fahrzeugräder zu gewährleisten.

Um die Zentrierbolzen an dem Spannflansch gegen ein Herausfallen zu sichern, was insbesondere auf den Verschließ der Bolzenfassungen bei fortschreitender Gebrauchsdauer der bekannten Spannvorrichtung zurückzuführen ist, weisen die Zentrierbolzen an ihren Enden auf der Seite des Einsteckbereichs in der Regel einen Gummiring auf, der nach dem Durchstecken des Bolzenendes durch die Zentrierbohrung auf der rückwärtigen Seite des Spannflansches expandiert und somit ein Herausfallen des Bolzens verhindert. Durch diese Art der Fixierung der Zentrierbolzen an dem Spannflansch wird eine ausreichende Haltekraft der Bolzen an dem Spannflansch sichergestellt. Von Nachteil dabei ist, daß sich die Zentrierbolzen zum Teil nur mit erheblichem Kraftaufwand in die Zentrierbohrungen einstecken lassen. Es muß sichergestellt sein, daß jeder Zentrierbolzen mit seinem den Gummiring aufweisenden Ende auf der rückwärtigen Seite des Spannflansches heraustritt, so daß der Gummiring expandieren kann. Zum Herausziehen muß dann der Bolzen entgegen der Haltekraft des Gummirings aus der Bohrung herausgezogen werden, was wiederum entsprechend kraftaufwendig ist. Werden die Bolzen über einen längeren Zeitraum nicht bewegt, kann es darüber hinaus zu einem Festsetzen der Zentrierbolzen in den Zentrierbohrungen kommen, was zu einem erhöhten Kraftaufwand beim Herausziehen der Bolzen aus den Zentrierbohrungen führt.

Eine Spannvorrichtung der eingangs genannten Art ist darüber hinaus aus der DE 103 31 129 A1 bekannt. Bei dieser bekannten Spannvorrichtung sind ebenfalls Zentrierbolzen vorgesehen, die in einer Gruppe von Ausnehmungen in einem Spannflansch entsprechend der Lochanordnung in einer Felge eines auf eine Welle einer Auswuchtmaschine aufzuspannenden Rades lösbar fixiert sind, Zur Reduzierung von Zentrierfehlern und/oder Wuchtfehlern aufgrund eines Spiels zwischen den Zentrierbolzen und dem Spannflansch, beispielsweise bedingt durch Fertigungstoleranzen oder Verschleiß, weist der Zentrierbolzen einen elastisch verformbaren Umfang auf, der in einer Funktionsstellung gegen eine die Ausnehmung begrenzende Wandfläche des Spannflansches anliegt. Der Umfang ist sowohl hydraulisch als auch mechanisch verformbar. Hierdurch wird eine Möglichkeit geschaffen, das Spiel zwischen dem Zentrierbolzen und dem Spannflansch aufgrund von Fertigungstoleranzen und -ungenauigkeiten bei der Herstellung der Zentrierbolzen bzw. der Ausnehmungen in dem Spannflansch auszugleichen und damit Zentrierfehler beim Aufspannen bzw. Auswuchtfehler beim Auswuchten des Fahrzeugrades zu reduzieren. Auch ein aus der Benutzung resultierender Verschleiß an dem Bolzen bzw. am Spannflansch kann durch das Nachstellen bzw. Anpassen des Umfangs des Zentrierbolzens an die zugeordnete Ausnehmung im Spannflansch ausgeglichen werden. Auch hier verhindert ein Sicherungsring das Lösen des Bolzens von dem Spannflansch, was zu den oben beschriebenen Nachteilen führt. Darüber hinaus ist die Verformung des Umfangs des Zentrierbolzens konstruktiv aufwendig und mit hohen Herstellungskosten verbunden. Im übrigen ist der Einsteckbereich des Zentrierbolzens hohl gebohrt, wodurch die Bauteilfestigkeit der Zentrierbolzen deutlich verringert wird.

Aus der DE 26 16 945 A1 ist eine Vorrichtung zum Aufspannen von Kraftfahrzeugrädern mit unterschiedlicher Lochanordnung auf die Welle einer Prüfmaschine bekannt, die eine mit Ausbrüchen versehene Spannplatte aufweist, in die entsprechend ausgeführte radial verstellbare Bolzen eingreifen. Die axial festgelegten Bolzen, die durch die Befestigungslöcher einer Radfelge ragen, weisen verschiebbare Konen auf, die durch Druckfedern in Richtung der aufzuspannenden Radfelge vorgespannt werden. Der Bolzen weist eine Eindrehung auf und wird in einem Bajonettverschluss des Spannkörpers über eine auf der dem aufzuspannenden Rad zugewandten Seite vorgesehene Vertiefung geführt, die über den gesamten Spannwinkelbereich verläuft. Darüber hinaus weist der Spannkörper eine Druckplatte auf, die mittels einer Verstelleinrichtung axial gegen die Radfelge gedrückt wird.

Weitere Spannvorrichtungen sind aus der US 2005/0275278 A1, der US 2005/0076519 A1 und der US 3,916,971 A bekannt.

Aufgabe der vorliegenden Erfindung ist es, eine Spannvorrichtung der eingangs genannten Art zur Verfügung zu stellen, die in einfacher Weise das Befestigen der Zentrierbolzen an dem Spannflansch und das spätere Lösen der Zentrierbolzen von dem Spannflansch ermöglicht, wobei auch nach längerer Gebrauchsdauer der Spannvorrichtung eine zentrierte Anordnung der Zentrierbolzen in den Ausnehmungen gewährleistet ist. Darüber hinaus soll sich die erfindungsgemäße Spannvorrichtung durch eine hohe Bauteilfestigkeit auszeichnen.

Die vorgenannten Aufgaben sind bei einer Spannvorrichtung der eingangs genannten Art dadurch gelöst, daß eine Profilkontur des Zentrierbolzens im Einsteckbereich und eine Innenkontur einer die Ausnehmung begrenzenden Seitenwand des Spannflansches nicht kreisförmig und derart komplementär zueinander ausgebildet sind, daß der Zentrierbolzen nach dem Einstecken in eine Ausnehmung um seine Längsachse abschnittsweise drehbar in der Ausnehmung aufgenommen ist, wobei es beim Drehen des Zentrierbolzens um seine Längsachse zur Ausbildung einer reibschlüssigen Verbindung zwischen wenigstens einem Flächenabschnitt einer Umfangsfläche des Zentrierbolzens im Einsteckbereich und wenigstens einem benachbarten Flächenabschnitt der die Ausnehmung begrenzenden Seitenwand des Spannflansches kommt.

Bei der Erfindung weisen weder der Zentrierbolzen im Einsteckbereich noch die Ausnehmungen in dem Spannflansch eine kreisförmige Kontur auf. Die Konturen sind statt dessen derart gewählt, daß die Umfangsfläche des Zentrierbolzens im Einsteckbereich und die benachbarte Umfangsfläche der Seitenwand des Spannflansches im Bereich der Ausnehmung als zusammenwirkende Auflaufflächen bzw. Auflaufschrägen ausgebildet sind, die durch Drehen des Zentrierbolzens um seine Längsachse in gegenseitigen Eingriff gelangen und eine in axiale und in Umfangsrichtung wirkende reibschlüssige Verbindung zwischen dem Zentrierbolzen und dem Spannflansch nach dem Erreichen eines vorgegebenen Drehwinkels gewährleisten. Durch die reibschlüssige Verbindung wird eine ausreichend große Haltekraft aufgebracht, die den Zentrierbolzen bei sehr genauer Zentrierung innerhalb der Ausnehmung an dem Spannflansch festsetzt. Gleichwohl ist es durch einfaches Zurückdrehen bei geringem Kraftaufwand möglich, die reibschlüssige Verbindung wieder zu lösen und den Zentrierbolzen aus der Ausnehmung herauszunehmen. Darüber hinaus ist die Fixierung des Zentrierbolzens an dem Spannflansch durch zusammenwirkende Auflaufflächen bzw. Auflaufschrägen konstruktiv einfach und führt nicht zu einer Schwächung der Bauteilfestigkeit des Zentrierbolzens und/oder des Spannflansches.

Die Profilkontur des Zentrierbolzens im Einsteckbereich und die Profilkontur der Ausnehmung sind darüber hinaus derart aneinander angepaßt, daß es beim Einsetzen des Zentrierbolzens und beim anschließenden Drehen in eine Verschlußstellung zu einer Selbstzentrierung des Zentrierbolzens in der Ausnehmung kommt. Dadurch wird die zentrierte Anordnung des Zentrierbolzens in einer Ausnehmung gewährleistet, ohne daß der Zentrierbolzen manuell justiert werden muß.

Entsprechende Profilkonturen lassen sich in einfacher Weise herstellen, beispielsweise durch stoßende Bearbeitung von Bohrungen. Die Profilform des Bolzens und die Form der Innenkontur der Seitenwandung des Spannflansches sind ist aber nicht auf eine bestimmte Form festgelegt. Es kommt lediglich darauf an, daß es die Profilkontur des Zentrierbolzens und die Innenkontur der Seitenwand des Spannflansches im Bereich der Ausnehmung zulassen, durch Drehen des Zentrierbolzens in der Ausnehmung um einen bestimmten Drehwinkel den Zentrierbolzen in der Ausnehmung zu zentrieren und zu verklemmen. Im übrigen sollten die zusammenwirkenden Profile derart gewählt sein, daß der Verschleiß an den zusammenwirkenden Flächenabschnitten bei mehrmaligem Fest- und Losdrehen des Zentrierbolzens in der Ausnehmung möglichst gering ist. In diesem Zusammenhang sollten die Kontaktflächen zwischen dem Zentrierbolzen und dem Spannflansch im Klemmzustand möglichst groß sein, um eine geringen Flächenpressung zu gewährleisten.

Um über eine längere Gebrauchsdauer eine einwandfreie Funktion trotz des zunehmenden Verschleißes der an der Ausbildung einer reibschlüssigen Verbindung beteiligten Flächenabschnitten des Zentrierbolzens und des Spannflansches sicherzustellen, sind die Profilkontur des Zentrierbolzens im Einsteckbereich und die Innenkontur der Seitenwandung des Spannflansches im Bereich der Ausnehmung vorzugsweise derart komplementär zueinander ausgebildet, daß der zur Ausbildung einer reibschlüssigen Verbindung erforderliche Drehwinkel des Zentrierbolzens in der Ausnehmung abhängig ist vom Verschleißzustand der die reibschlüssige Verbindung zwischen Bolzen und Spannflansch bildenden Flächenabschnitte. Der notwendige Drehwinkel, um den der Zentrierbolzen in der Ausnehmung gedreht werden muß, um eine reibschlüssige Verbindung mit dem Spannflansch eingehen zu können, wird durch die komplementären Konturen vorgegeben. Durch Verschleiß kommt es zur Abnutzung der Oberflächen des Zentrierbolzens und/oder des Spannflansches, wobei der zunehmende Abrieb bewirkt, daß der Zentrierbolzen stärker verdreht werden muß, um eine reibschlüssige Verbindung zwischen dem Zentrierbolzen und dem Spannflansch auszubilden. Vorzugsweise sollte der Drehwinkel des Zentrierbolzens in einem Neuzustand der Spannvorrichtung ca. der Hälfte des maximal zur Ausbildung einer reibschlüssigen Verbindung möglichen Drehwinkels in einem Verschleißzustand der Spannvorrichtung entsprechen. Dadurch kann trotz zunehmendem Verschleiß die Ausbildung einer reibschlüssigen Verbindung sichergestellt werden, wobei es nach entsprechendem Verschleiß der Kontaktflächen erforderlich ist, den Zentrierbolzen um einen Winkel zu verdrehen, der größer ist als der maximal mögliche Drehwinkel im Neuzustand.

Die Innenkontur des Spannflansches im Bereich der Ausnehmung kann eine Mehrzahl von in Umfangsrichtung aufeinander folgenden Bogenabschnitten aufweisen, wobei der Abstand zwischen dem Mittelpunkt der Ausnehmung und wenigstens zwei in Umfangsrichtung eines Bogenabschnitts voneinander beabstandeten Punkten auf der Innenkontur der Seitenwand des Spannflansches unterschiedlich groß ist. Wenigstens ein Konturabschnitt mit einem sich in Umfangsrichtung ändernden Abstand zum Mittelpunkt der Ausnehmung muß vorgesehen sein, damit überhaupt die Ausbildung einer reibschlüssigen Verbindung zwischen dem Zentrierbolzen und dem Spannflansch möglich ist. Weist die Innenkontur der Seitenwand des Spannflansches im Bereich einer Ausnehmung eine Mehrzahl von aufeinanderfolgenden Bogenabschnitten auf, so kommt es bei Erreichen des Reibschlusses zu einem Flächenkontakt vorzugsweise im Bereich eines jeden Bogenabschnitts. Um hier die Flächenpressung und damit den Abrieb gering zu halten, sind bei einer bevorzugten Ausführungsform der Erfindung drei Bogenabschnitte vorgesehen, die die Innenkontur des Spannflansches im Bereich der Ausnehmung bilden. Es versteht sich, daß jedoch auch zwei oder auch mehr als drei Bogenabschnitte vorgesehen sein können, um entsprechende zusammenwirkende Auflaufflächen zur Verfügung zu stellen. Die Profilkontur des Zentrierbolzens im Einsteckbereich muß dementsprechend angepaßt sein.

Bei einer bevorzugten Ausführungsform ist vorgesehen, daß der Abstand zwischen dem Mittelpunkt der Ausnehmung und der Innenkontur der Seitenwand des Spannflansches über die Länge eines Bogenabschnitts in einer Umfangsrichtung stetig abnimmt von einem Startpunkt auf der Innenkontur mit einem größten Abstand zum Mittelpunkt der Ausnehmung im Bereich eines Bogenanfangs bis zu einem Endpunkt auf der Innenkontur mit einem kleinsten Abstand zum Mittelpunkt der Ausnehmung im Bereich eines Bogenendes. Beim Einsetzen des Zentrierbolzens in eine Ausnehmung ist somit eine Relativbewegung zwischen dem Zentrierbolzen und dem Spannflansch in der Ausnehmung möglich. Beim Drehen des Zentrierbolzens in die eine Umfangsrichtung nimmt das vorhandene Spiel zwischen dem Zentrierbolzen und dem Spannflansch ab, bis es zur reibschlüssigen Verbindung zwischen wenigstens einem Flächenabschnitt einer Umfangsfläche des Zentrierbolzens und wenigstens einem benachbarten Flächenabschnitt der die Ausnehmung begrenzenden Seitenwand bzw. Innenwandung des Spannflansches kommt. Zum vereinfachten Einsetzen des Zentrierbolzens in eine Ausnehmung kann der Abstand zwischen dem Mittelpunkt der Ausnehmung und der Innenkontur von einem Anfangspunkt des Bogenabschnitts in Richtung auf den Startpunkt stetig zunehmen.

Weist die die Ausnehmung begrenzende Seitenwand des Spannflansches eine Innenkontur mit einer Mehrzahl von in Umfangsrichtung nacheinanderfolgenden Bogenabschnitten auf, sind alle Bogenabschnitte vorzugsweise identisch ausgebildet, so daß es beim Einsetzen des Zentrierbolzens in die Ausnehmung und beim anschließenden Drehen in die Reibschlußstellung zu einer automatischen Zentrierung des Zentrierbolzens in der Ausnehmung kommt. Im übrigen wird die Herstellung einer bestimmten Innenkontur vereinfacht. In diesem Zusammenhang kann vorgesehen sein, daß der Endpunkt eines ersten Bogenabschnitts und der Anfangspunkt eines in Umfangsrichtung nachfolgenden zweiten Bogenabschnitts denselben (minimalen) Abstand zum Mittelpunkt der Ausnehmung aufweisen. Vorzugsweise gehen der Endpunkt des ersten Bogenabschnitts und der Anfangspunkt des zweiten Bogenabschnitts stufenlos ineinander über.

Ist jeder Bogenabschnitt im Bereich zwischen dem Startpunkt und dem Endpunkt des Bogens, in dem sich der Abstand zwischen dem Mittelpunkt des Ausschnitts und der Innenkontur stetig ändert, als Kreisbogen ausgebildet, so sind der Mittelpunkt des Kreisbogens eines ersten Bogenabschnitts und der Mittelpunkt eines Kreisbogens eines in Umfangsrichtung nachfolgenden weiteren Bogenabschnitts in horizontaler und vertikaler Richtung versetzt zueinander und versetzt zum Mittelpunkt der Ausnehmung angeordnet. Dies führt dazu, daß sich der Abstand zwischen dem Mittelpunkt der Ausnehmung und der Innenkontur der Seitenwand des Spannflansches im Bereich der Ausnehmung vom Startpunkt bis zu dem Endpunkt des Bogenabschnitts in Umfangsrichtung stetig ändert, nämlich in der einen Umfangsrichtung zunimmt und in der anderen Umfangsrichtung abnimmt, so daß es beim Drehen des Zentrierbolzens in der Ausnehmung bei Erreichen eines vorgegebenen Drehwinkels zu einem Reibschluß bzw. zur Aufhebung des Reibschlusses kommt.

Der Einsteckbereich des Zentrierbolzens kann vorzugsweise ein Polygonprofil, insbesondere das Profil eines dreiseitigen Dreiecks mit abgerundeten Ekken oder eines Vierecks mit abgerundeten Ecken aufweisen. Ist das Profil eines dreiseitigen Dreiecks mit abgerundeten Ecken vorgesehen, so setzt sich die Innenkontur der Seitenwand des Spannflansches aus drei Bogenabschnitten zusammen, wobei im Bereich eines jeden Bogenabschnitts bei Erreichen des vorgesehenen Drehwinkels eine reibschlüssige Verbindung zwischen dem Zentrierbolzen und dem Spannflansch ausgebildet wird. Gleiches gilt entsprechend für den Fall, daß der Einsteckbereich des Zentrierbolzens als Viereckprofil mit abgerundeten Ecken ausgebildet ist, wobei die Innenkontur durch vier in Umfangsrichtung nachfolgende Bogenabschnitte gebildet wird. Es versteht sich, daß der Einsteckbereich des Zentrierbolzens auch das Profil einer Ellipse oder ein rechteckiges Profil mit gerundeten Querseiten aufweisen kann, wobei die Innenkontur der Seitenwand des Spannflansches, die eine Ausnehmung begrenzt, dementsprechend aus zwei Bogenabschnitten gebildet sein kann.

Bei einer anderen Ausführungsform der Erfindung ist vorgesehen, daß die Profilkontur des Zentrierbolzens im Einsteckbereich eine Mehrzahl von in Umfangsrichtung des Zentrierbolzens aufeinander folgende Bogenabschnitte aufweist und daß die Bogenabschnitte der Profilkontur des Zentrierbolzens komplementär zu den Bogenabschnitten der Innenkontur der Seitenwand des Spannflansches im Bereich der Ausnehmung ausgebildet sind. Dadurch wird eine große Kontaktfläche zwischen dem Zentrierbolzen und dem Spannflansch im Bereich der Ausnehmung in der Reibschlußstellung sichergestellt, was zu einer entsprechend geringen Flächenpressung und damit zu einem geringen Verschleiß beiträgt.

Im einzelnen gibt es eine Vielzahl von Möglichkeiten, die erfindungsgemäße Spannvorrichtung auszubilden, wobei einerseits auf die abhängigen Patentansprüche und andererseits auf die nachfolgende Beschreibung eines bevorzugten Ausführungsbeispiels der Erfindung verwiesen wird. In der Zeichnung zeigen
- Fig. 1: eine Explosionsdarstellung einer ersten Ausführungsform einer erfindungsgemäßen Spannvorrichtung mit einem Spannflansch und fünf Zentrierbolzen,
- Fig. 2: eine Ansicht der in Fig. 1 dargestellten Spannvorrichtung von unten mit eingesteckten Zentrierbolzen,
- Fig. 3a: eine Darstellung der Einzelheit Z aus Fig. 2 mit einem in eine Ausnehmung des Spannflansches eingesteckten Bolzen,
- Fig. 3b: die Innenkontur der in Fig. 3a dargestellten Ausnehmung in einer Ansicht von oben,
- Fig. 4: einen Spannflansch einer weiteren Ausführungsform einer erfindungsgemäßen Spannvorrichtung in einer Ansicht von oben,
- Fig. 5: den in Fig. 4 dargestellten Spannflansch in einer Seitenansicht,
- Fig. 6: die Einzelheit Z aus Fig. 4,
- Fig. 7: die Einzelheit Z aus Fig. 4 mit einem eingesetzten Zentrierbolzen mit Polygonprofil in der Reibschlußstellung, wobei der Zentrierbolzen geschnitten dargestellt ist,
- Fig. 8: die in Fig. 6 dargestellte Einzelheit Z mit eingesetztem Zentrierbolzen mit einer an das Profil des Spannflansches angepaßten Profilkontur in einer Reibschlußstellung, wobei der Zentrierbolzen geschnitten dargestellt ist,
- Fig. 9: eine weitere Ausführungsform eines Zentrierbolzens für die in Fig. 1 dargestellte Spannvorrichtung und
- Fig. 10: eine Querschnittsansicht des in Fig. 1 dargestellten Spannflansches mit einer Mehrzahl von eingesteckten Zentrierbolzen der in Fig. 9 dargestellten Art.

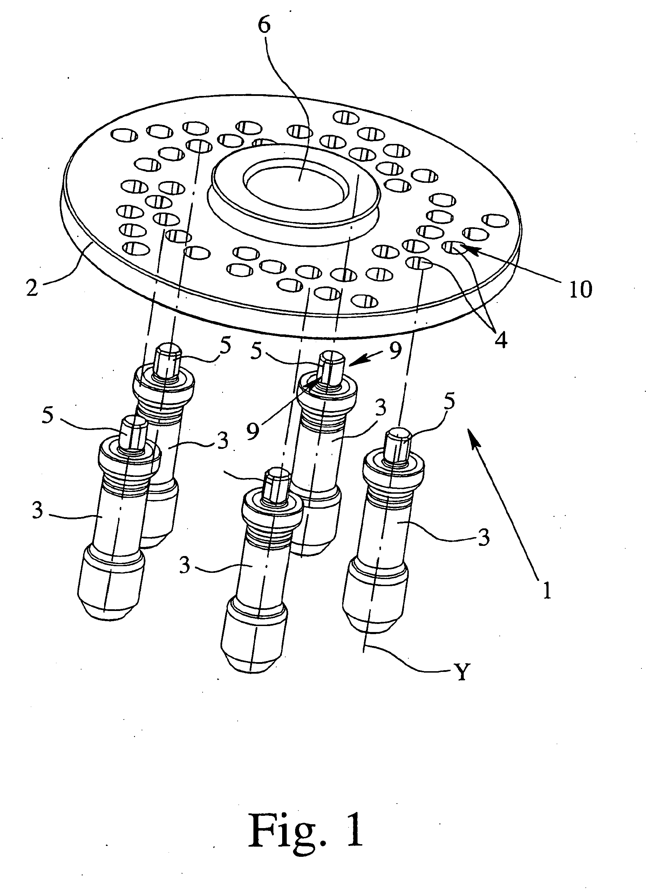

In Fig. 1 ist eine Spannvorrichtung 1 zum Aufspannen eines nicht dargestellten Fahrzeugrades auf eine Welle einer Auswuchtmaschine dargestellt, die einen Spannflansch 2 und eine Mehrzahl von Zentrierbolzen 3 aufweist. Der Spannflansch 2 weist eine Mehrzahl von Ausnehmungen 4 zur Aufnahme der Zentrierbolzen 3 auf, wobei ein Zentrierbolzen 3 mit einem Einsteckbereich 5 lösbar in eine Ausnehmung 4 einsteckbar ist. Entsprechend der Lochanordnung in der Felge des aufzuspannenden Fahrzeugrades werden die Zentrierbolzen 3 in eine Gruppe von Ausnehmungen 4 lösbar fixiert. Durch die in die Zentrier- bzw. Befestigungslöcher der Felge des Fahrzeugrades eingreifenden Zentrierbolzen 3 erfolgt eine radiale Zentrierung des Fahrzeugrades beim Auswuchtvorgang. Der Spannflansch 2 weist eine zentrale Durchbrechung 6 auf, die das Aufschieben auf die Welle der Auswuchtmaschine ermöglicht.

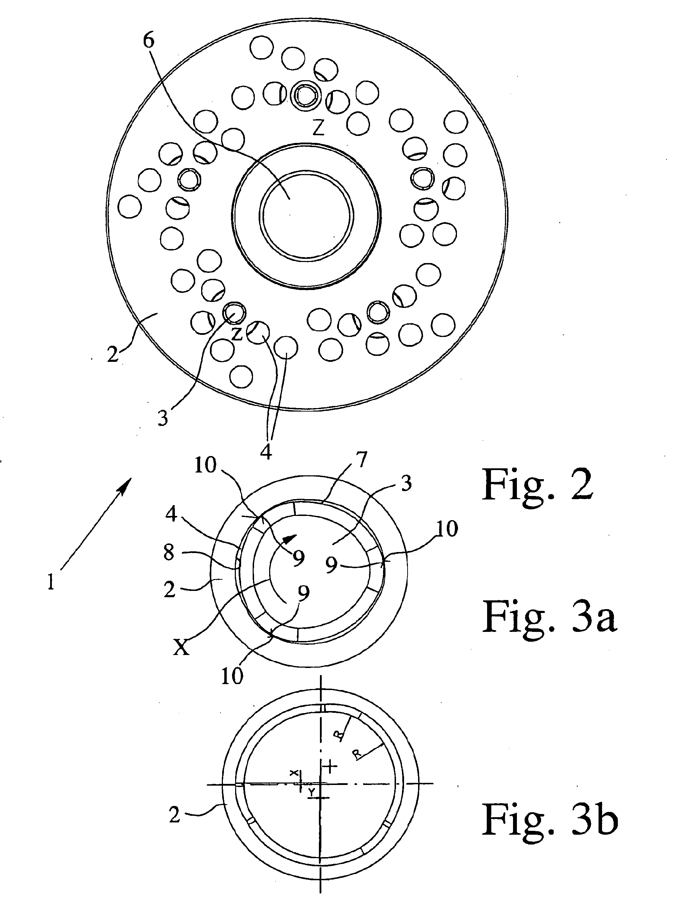

In Fig. 2 ist die in Fig. 1 dargestellte Spannvorrichtung 1 in einer Ansicht von unten dargestellt, wobei die Zentrierbolzen 3 mit den Einsteckbereichen 5 in eine Gruppe von Ausnehmungen 4 im Spannflansch 3 eingesteckt sind. In Fig. 3a ist die Einzelheit Z aus Fig. 2 dargestellt, wobei sich der Zentrierbolzen 3 in einer Reibschlußstellung befindet. In Fig. 3b ist eine Innenkontur der in Fig. 3a dargestellten Ausnehmung in einer Ansicht von oben auf den Spannflansch 2 dargestellt.

Zur Befestigung mit dem Spannflansch 2 weist der Zentrierbolzen 3 im Einsteckbereich 5 eine nicht kreisförmige Profilkontur 7 auf, wobei es sich bei der dargestellten Ausführungsform um ein Polygonprofil handelt. Die eine Ausnehmung 4 begrenzende Innenkontur 8 einer Seitenwand bzw. Innenwandung des Spannflansches 2 ist ebenfalls nicht kreisförmig ausgebildet. Die Profilkontur 7 und die Innenkontur 8 sind dabei derart komplementär zueinander ausgebildet, daß der Zentrierbolzen 3 nach dem Einstecken in eine Ausnehmung 4 um seine Längsachse Y abschnittsweise, d.h. um einen vorgegebenen Drehwinkel drehbar in der Ausnehmung 4 aufgenommen ist und daß es beim Drehen des Zentrierbolzens 3 um seine Längsachse Y zur Ausbildung einer reibschlüssigen Verbindung mit dem Spannflansch 2 kommt. Dabei wird eine reibschlüssige Verbindung zwischen dem Zentrierbolzen 3 und dem Spannflansch 2 im Bereich der Flächenabschnitte 9 der Umfangsfläche des Zentrierbolzens 3 und benachbarter Flächenabschnitte 10 der die Ausnehmung 4 begrenzenden Innenwandung des Spannflansches 2 ausgebildet.

Die Flächenabschnitte 9, die beim Drehen des Zentrierbolzens 3 in der Ausnehmung 4 mit den Flächenabschnitten 10 des Spannflansches 2 in Kontakt treten, liegen im Bereich der abgerundeten Ecken des als Polygonprofil ausgebildeten Einsteckbereichs 5. Wie sich aus Fig. 3a weiter ergibt, ist es durch Zurückdrehen des Zentrierbolzens 3 entgegen der Umfangsrichtung X möglich, den Reibschluß zwischen dem Zentrierbolzen 3 und dem Spannflansch 2 wieder aufzuheben, wobei die Flächenabschnitte 9 des Zentrierbolzens 3 und die Flächenabschnitte 10 des Spannflansches 2 außer Kontakt treten. Durch die vorgegebene Profilkontur 7 des Zentrierbolzens 3 im Einsteckbereich 5 und die Innenkontur 8 der Seitenwand des Spannflansches 2 im Bereich der Ausnehmung 4 wird somit nach dem Einsetzen des Zentrierbolzens 3 und dem anschließenden Drehen in die Reibschlußstellung der Zentrierbolzen 3 in der Ausnehmung 4 eingeklemmt und gleichzeitig zentriert.

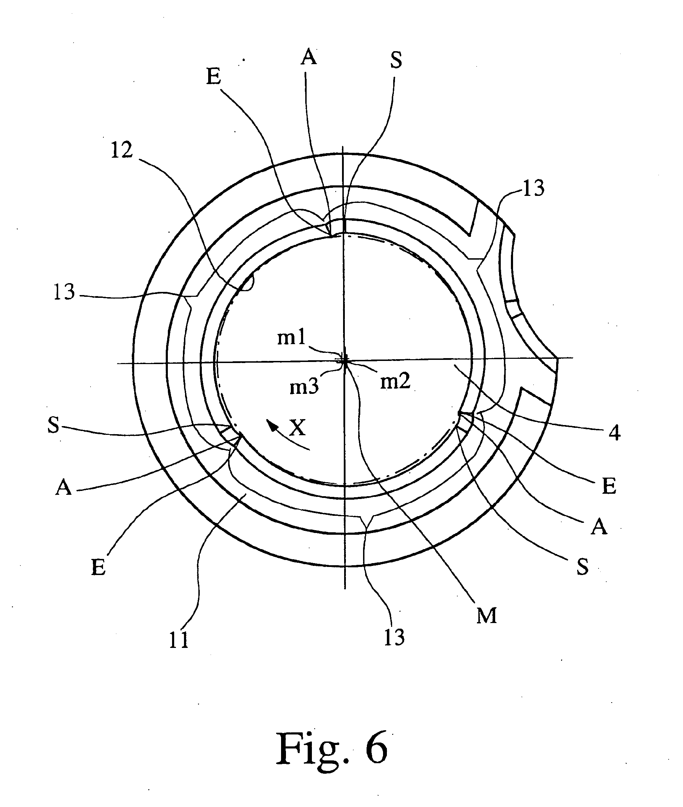

Entscheidend für die Klemm- und Zentrierfunktion ist, daß sich der Abstand zwischen dem Mittelpunkt der Ausnehmung 4 und der Innenkontur 8 der Seitenwand des Spannflansches 2 in Umfangsrichtung X abschnittsweise ändert. Die Innenkontur 8 wird durch Bogenabschnitte gebildet, deren Mittelpunkte gegeneinander und auch gegenüber dem Mittelpunkt der Ausnehmung 4 versetzt sind. Dies ist in Fig. 3b schematisch dargestellt und wird anhand von Fig. 6 im einzelnen erläutert.

Die Flächenabschnitte 9 des Zentrierbolzens 3 und die Flächenabschnitte 10 des Spannflansches 2 wirken in der Art von Auflaufflächen zusammen, wobei es bei zunehmender Drehung des Zentrierbolzens 3 in der Ausnehmung 4 zu einer Verringerung des Spiels zwischen einem Flächenabschnitt 9 des Zentrierbolzens 3 und einem Flächenabschnitt 10 des Spannflansches 2 kommt, bis der Reibschluß erreicht ist. In der Reibschlußstellung besteht folglich eine reibschlüssige Verbindung lediglich zwischen den Flächenabschnitten 9 der Umfangsfläche des Zentrierbolzens 3 und den Flächenabschnitten 10 der die Ausnehmung 4 begrenzenden Innenwandung des Spannflansches 2.

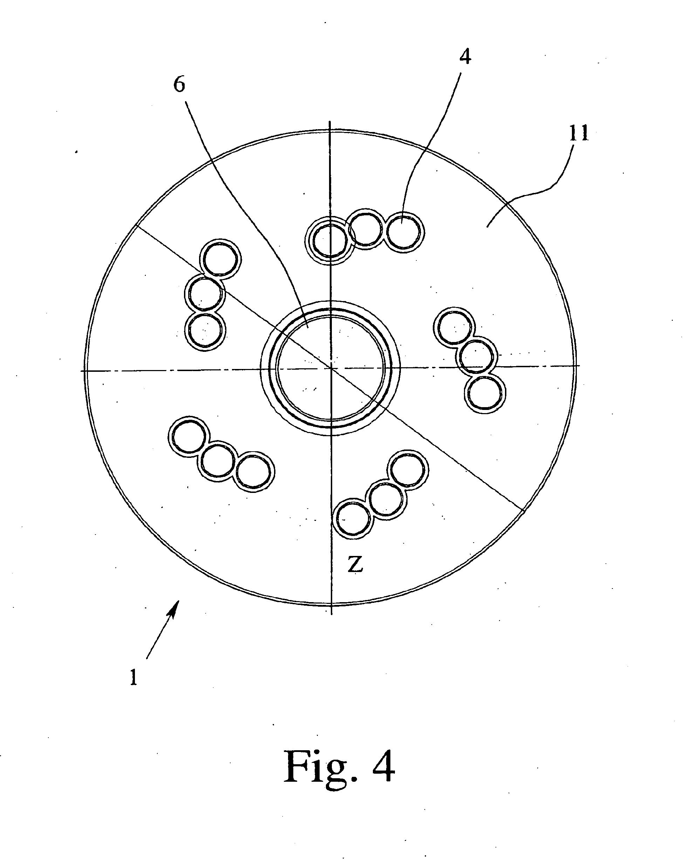

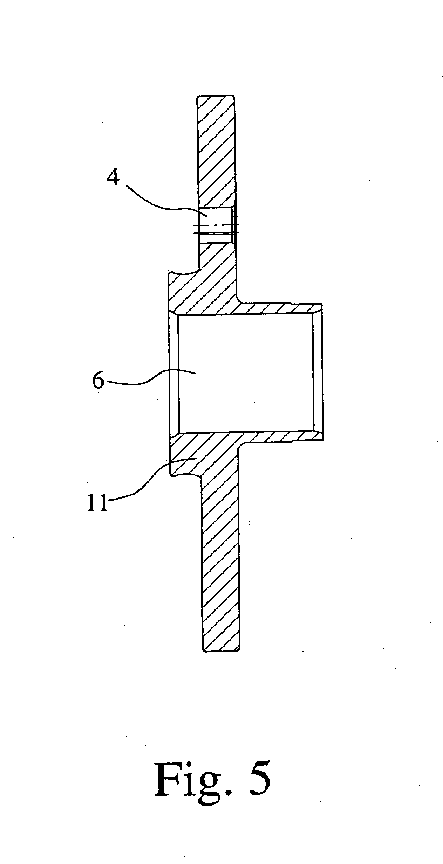

In Fig. 4 ist ein Spannflansch 11 einer weiteren Ausführungsform einer Spannvorrichtung 1 dargestellt. Der Spannflansch 11 weist eine Mehrzahl von Ausnehmungen 4 und eine zentrale Durchbrechung 6 auf. Die Kanten des Spannflansches 11 sind im Bereich der Ausnehmungen 4 angefast. In Fig. 5 ist eine Querschnittsansicht des Spannflansches 11 dargestellt.

Fig. 6 zeigt die Einzelheit Z aus Fig. 4. Die eine Ausnehmung 4 begrenzende Innenkontur 12 der Seitenwand des Spannflansches 11 ist wiederum nicht kreisförmig ausgebildet, sondern wird von einer Mehrzahl von in Umfangsrichtung X aufeinander folgenden Bogenabschnitten 13 gebildet, wobei der Abstand zwischen dem Mittelpunkt M der Ausnehmung 4 und der Innenkontur 12 des Spannflansches 2 über die Länge eines Bogenabschnitts 13 in der Umfangsrichtung X stetig abnimmt von einem Startpunkt S auf der Innenkontur 12 mit einem größten Abstand zum Mittelpunkt M der Ausnehmung 4 im Bereich eines Bogenanfangs des Bogenabschnitts 13 bis zu einem Endpunkt E auf der Innenkontur 12 mit einem kleinsten Abstand zum Mittelpunkt M der Ausnehmung 4 im Bereich eines Bogenendes eines Bogenabschnitts 13. Wird ein Zentrierbolzen 3 mit dem Einsteckbereich 5 in die Ausnehmung 4 eingesetzt, kommt es aufgrund des sich in Umfangsrichtung X verringernden Abstandes zwischen dem Mittelpunkt M der Ausnehmung 4 und der Innenkontur 12 eines Bogenabschnitts 13 zur Ausbildung einer reibschlüssigen Verbindung zwischen dem Zentrierbolzen 3 und dem Spannflansch 2, und zwar im Bereich eines jeden Bogenabschnitts 13. Dabei wird die Innenkontur 12 des Spannflansches 2 durch drei Bogenabschnitte 13 mit einem identischen Bogenverlauf gebildet. Dies führt zu einer Zentrierung des Zentrierbolzens 3 in einer Ausnehmung 4 beim Eindrehen in die Reibschlußstellung.

Um das Einsetzen des Zentrierbolzens 3 mit dem Einsteckbereich 5 in eine Ausnehmung 4 zu vereinfachen, nimmt der Abstand zwischen dem Mittelpunkt M der Ausnehmung 4 und der Innenkontur 12 des Spannflansches 2 von einem Anfangspunkt A eines Bogenabschnitts 13 in Richtung zu dem Startpunkt S stetig zu. Der Übergang zwischen dem Endpunkt E eines ersten Bogenabschnitts 13 und dem Anfangspunkt A eines in Umfangsrichtung X nachfolgenden zweiten Bogenabschnitts 13 weisen denselben Abstand zum Mittelpunkt der Ausnehmung 4 auf, so daß der Übergang zwischen nachfolgenden Bogenabschnitten 13 stufenlos ist.

Wie sich aus Fig. 6 weiter ergibt, ist jeder Bogenabschnitt 13 im Bereich zwischen dem Startpunkt S und dem Endpunkt E als Kreisbogenabschnitt ausgebildet, wobei die Mittelpunkte m1, m2, m3 der Kreisbogenabschnitte der in Umfangsrichtung nachfolgenden Bogenabschnitte 13 versetzt zueinander und versetzt zum Mittelpunkt M der Ausnehmung 4 angeordnet sind. Durch die versetzt zueinander angeordneten Bogenabschnitte 13 wird die Klemm- und Zentrierfunktion sichergestellt. Das Grundprinzip beruht darauf, daß die Innenwand des Spannflansches 11 im Bereich einer Ausnehmung 4 und die Außenwand des Zentrierbolzens 3 im Einsteckbereich 5 bei mittiger Anordnung des Zentrierbolzens 3 in der Ausnehmung 4 in Umfangsrichtung X nicht parallel verlaufen. In Umfangsrichtung X nimmt das Spiel zwischen dem Zentrierbolzen 3 und der die Innenkontur 12 des Spannflansches 2 festlegenden Innenwand des Spannflansches 2 im Bereich einer Ausnehmung 4 zumindest abschnittsweise ab, so daß es beim Drehen des Bolzens 3 zu einer reibschlüssigen Verbindung kommt.

Im Bereich zwischen dem Anfangspunkt A und dem Startpunkt S ist der Bogenabschnitt 13 ebenfalls als Kreisbogenabschnitt ausgebildet, weist jedoch einen anderen Kreisbogenradius auf als im Bereich zwischen dem Startpunkt S und dem Endpunkt E.

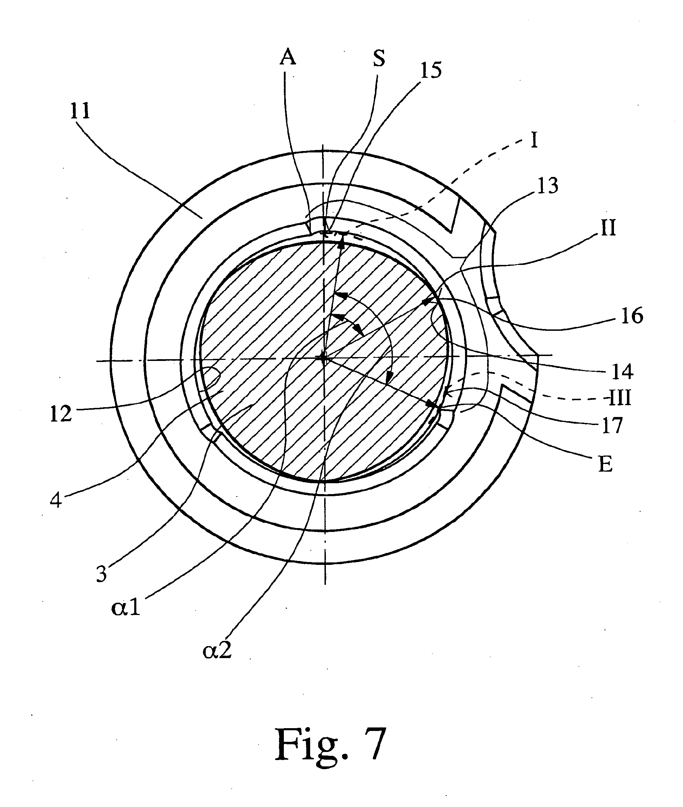

In Fig. 7 ist die Einzelheit Z aus Fig. 4 mit einem in die Ausnehmung 4 eingesetzten Zentrierbolzen 3 dargestellt. Fig. 6 und Fig. 7 zeigen Darstellungen des Spannflansches 11 von oben, wobei in Fig. 7 der Zentrierbolzen 3 geschnitten dargestellt ist. In der mit I gekennzeichneten Stellung befindet sich der Zentrierbolzen 3 in der Einsteckstellung, wobei zwischen einem Flächenabschnitt 14 des Zentrierbolzens 3 und einem Flächenabschnitt 15 einer Innenwandung des Spannflansches 2 ein Spiel vorhanden ist. Dies gilt für alle drei Bogenabschnitte 13. Nach Drehen des Zentrierbolzens 3 um einen Winkel α1 gelangt der Zentrierbolzen 3 in eine Reibschlußstellung II, wobei der Flächenabschnitt 14 mit einem Flächenabschnitt 16 der Innenwandung des Spannflansches 2 zur Klemmung kommt. Der Flächenabschnitt 16 liegt im mittigen Bereich von etwa der halben Bogenlänge eines Bogenabschnitts 13 zwischen dem Startpunkt S und dem Endpunkt E. Durch Verschleiß der Flächenabschnitte 14 des Zentrierbolzens 3 und/oder der Flächenabschnitte 16 des Spannflansches 2 muß der Zentrierbolzen 3 um einen größeren Drehwinkel verdreht werden, damit es zur Klemmung kommt. Befindet sich der Zentrierbolzen 3 in der mit III gekennzeichneten weiteren Reibschlußstellung, ist der maximale Drehwinkel α2 erreicht, was im Verschleißzustand des Zentrierbolzens 3 und/oder des Spannflansches 2 der Fall ist. In der Reibschlußstellung III besteht in jedem Bogenabschnitt 13 eine reibschlüssige Verbindung zwischen dem Flächenabschnitt 14 des Zentrierbolzens 3 und einen Flächenabschnitt 17 des Spannflansches 2 im Bereich des Bogenendes des betreffenden Bogenabschnitts 13. Der Drehwinkel α1 im Neuzustand beträgt vorzugsweise etwa die Hälfte des maximal möglichen Drehwinkels α2 im Verschleißzustand. Im Ergebnis kommt es im Neuzustand der Spannvorrichtung 1 nach Erreichen ca. der halben Bogenlänge eines Bogenabschnitts 13 zur Klemmung, wobei sich der Ort der Klemmung mit fortschreitendem Verschleiß in Richtung zum Endpunkt E eines Bogenabschnitts 13 verlagert.

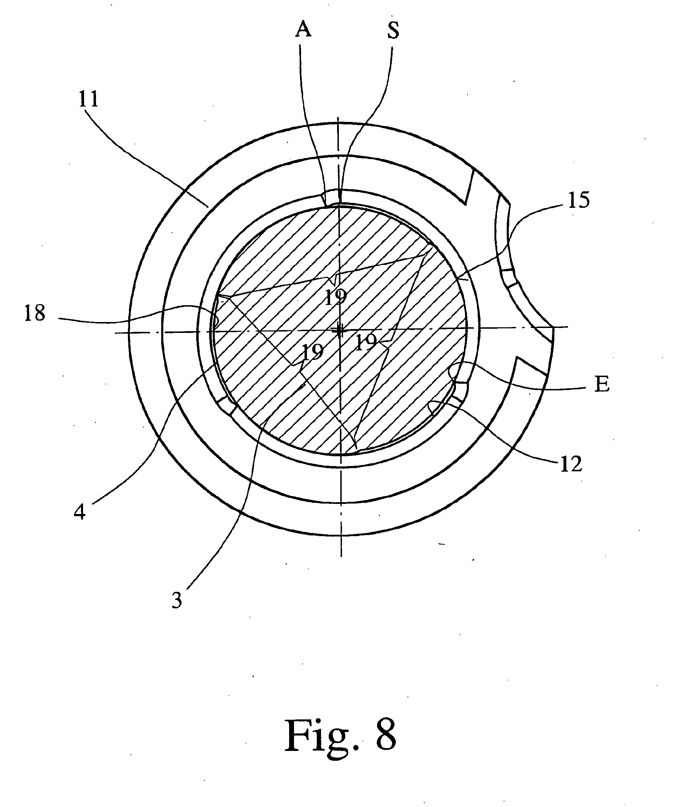

In Fig. 8 ist schließlich die Einzelheit Z aus Fig. 4 mit einem in den Spannflansch 2 eingesetzten Zentrierbolzen 3 in der Reibschlußstellung dargestellt, wobei die Profilkontur 18 des Zentrierbolzens 3 im Einsteckbereich 5 von einer Mehrzahl in Umfangsrichtung X aufeinander folgender Bogenabschnitte 19 gebildet wird und wobei die Bogenabschnitte 19 komplementär zu den Bogenabschnitten 13 der Innenkontur 12 der Seitenwand des Spannflansches 2 ausgebildet sind. Diese Ausführungsform zeichnet sich durch eine sehr hohe Haltekraft aus, die bei reibschlüssiger Verbindung zwischen dem Zentrierbolzen 3 und dem Spannflansch 2 erreicht wird.

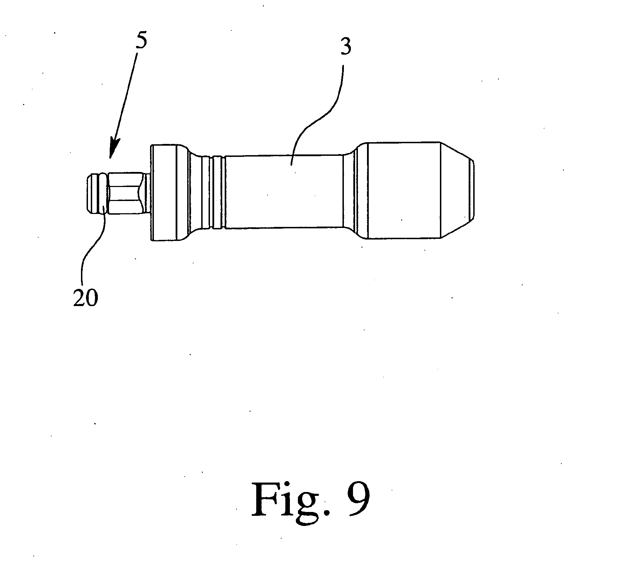

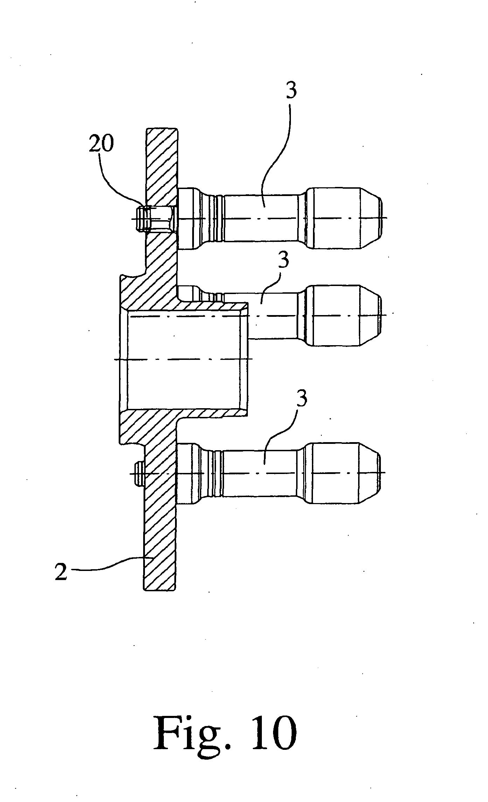

Wie sich aus den Fig. 9 und 10 ergibt, kann der Zentrierbolzen 3 im Einsteckbereich 5 eine Nut für einen O-Ring 20 aufweisen. Durch den O-Ring 20 wird der Zentrierbolzen 3 nach dem Einstecken in eine Ausnehmung 4 des Spannflansches 2 unverlierbar an dem Spannflansch 2 gehalten. Der O-Ring 20 soll lediglich ein Herausfallen des Zentrierbolzens 3 aus der Ausnehmung 4 verhindern, solange der Zentrierbolzen 3 noch nicht in die Reibschlußstellung gedreht ist.

## Patentansprüche

1. Spannvorrichtung (1) zum Aufspannen eines Fahrzeugrades auf eine Welle einer Auswuchtmaschine, mit einem Spannflansch (2, 11) und mit einer Mehrzahl von Zentrierbolzen (3), wobei der Spannflansch (2, 11) eine Mehrzahl von Ausnehmungen (4) zur Aufnahme der Zentrierbolzen (3) aufweist und wobei jeder Zentrierbolzen (3) mit einem Einsteckbereich (5) lösbar in eine Ausnehmung (4) einsteckbar ist, dadurch gekenntzeichnet, daß eine Profilkontur (7, 18) des Zentrierbolzens (3) im Einsteckbereich (5) und eine Innenkontur (8, 12) einer die Ausnehmung (4) begrenzenden Seitenwand des Spannflansches (2, 11) nicht kreisförmig und derart komplementär zueinander ausgebildet sind, daß der Zentrierbolzen (3) nach dem Einstecken in eine Ausnehmung (4) um seine Längsachse (Y) abschnittsweise drehbar in der Ausnehmung (4) aufgenommen ist, wobei es durch Drehen des Zentrierbolzens (3) um seine Längsachse (Y) zur Ausbildung einer reibschlüssigen Verbindung zwischen wenigstens einem Flächenabschnitt (9, 14) einer Umfangsfläche des Zentrierbolzens (3) im Einsteckbereich (5) und wenigstens einem benachbarten Flächenabschnitt (10, 16, 17) der die Ausnehmung (4) begrenzenden Seitenwand des Spannflansches (2, 11) kommt und wobei die Umfangsfläche des Zentrierbolzens (3) im Einsteckbereich (5) und eine benachbarte Umfangsfläche der Seitenwand des Spannflansches (2, 11) im Bereich der Ausnehmung (4) als zusammenwirkende Auflaufflächen bzw. Auflaufschrägen ausgebildet sind, die durch Drehen des Zentrierbolzens (3) um seine Längsachse in gegenseitigen Eingriff gelangen und eine in axiale und in Umfangsrichtung wirkende reibschlüssige Verbindung zwischen dem Zentrierbolzen (3) und dem Spannflansch (2, 11) nach dem Erreichen eines vorgegebenen Drehwinkels gewährleisten.

2. Spannvorrichtung nach Anspruch 1, **dadurch gekennzeichnet, daß** der zur Ausbildung einer reibschlüssigen Verbindung erforderliche Drehwinkel (α1, α2) des Zentrierbolzens (3) in der Ausnehmung (4) abhängig ist vom Verschleißzustand der die reibschlüssige Verbindung bildenden Flächenabschnitte (9, 10, 14, 16, 17).

3. Spannvorrichtung nach Anspruch 1 oder 2, **dadurch gekennzeichnet, daß** der Drehwinkel (α1) des Zentrierbolzens (3) in einem Neuzustand der Spannvorrichtung ca. der Hälfte des maximal zur Ausbildung einer reibschlüssigen Verbindung möglichen Drehwinkels (α2) in einem Verschleißzustand der Spannvorrichtung entspricht.

4. Spannvorrichtung nach einem der vorhergehenden Ansprüche, **dadurch gekennzeichnet, daß** die Innenkontur (8, 12) der Seitenwand des Spannflansches (2, 11) von einer Mehrzahl in Umfangsrichtung (X) aufeinander folgender Bogenabschnitte (13) gebildet wird, wobei sich der Mittelpunkt (M) der Ausnehmung (4) innerhalb der Ausnehmung (4) befindet und wobei der Abstand zwischen dem Mittelpunkt (M) der Ausnehmung (4) und wenigstens zwei in einer Umfangsrichtung (X) eines Bogenabschnitts (13) voneinander beabstandeten Punkten auf der Innenkontur (8, 12) unterschiedlich groß ist.

5. Spannvorrichtung nach Anspruch 4, **dadurch gekennzeichnet, daß** der Abstand zwischen dem Mittelpunkt (M) der Ausnehmung (4) und der Innenkontur (8, 12) über die Länge eines Bogenabschnitts (13) in einer Umfangsrichtung (X) stetig abnimmt von einem Startpunkt (S) auf der Innenkontur (8, 12) mit einem größten Abstand zum Mittelpunkt (M) der Ausnehmung (4) im Bereich eines Bogenanfangs bis zu einem Endpunkt (E) auf der Innenkontur (8, 12) mit einem kleinsten Abstand zum Mittelpunkt (M) der Ausnehmung (4) im Bereich eines Bogenendes.

6. Spannvorrichtung nach Anspruch 4 oder 5, **dadurch gekennzeichnet, daß** der Abstand zwischen dem Mittelpunkt (M) der Ausnehmung (4) und der Innenkontur (8, 12) von einem Anfangspunkt (A) des Bogenabschnitts (13) bis zu dem Startpunkt (S) stetig zunimmt.

7. Spannvorrichtung nach einem der vorhergehenden Ansprüche 4 bis 6, **dadurch gekennzeichnet, daß** alle Bogenabschnitte (13) den gleichen Bogenverlauf aufweisen.

8. Spannvorrichtung nach einem der vorhergehenden Ansprüche 4 bis 7, **dadurch gekennzeichnet, daß** der Endpunkt (E) eines ersten Bogenabschnitts (13) und der Anfangspunkt (A) eines in Umfangsrichtung (X) nachfolgenden zweiten Bogenabschnitts (13) denselben Abstand zum Mittelpunkt (M) der Ausnehmung (4) aufweisen.

9. Spannvorrichtung nach einem der vorhergehenden Ansprüche 4 bis 8, **dadurch gekennzeichnet, daß** jeder Bogenabschnitt (13) im Bereich zwischen dem Startpunkt (S) und dem Endpunkt (E) als Kreisbogen ausgebildet ist, wobei die Mittelpunkte (m1, m2 m3) der Kreisbögen versetzt zueinander und versetzt zum Mittelpunkt (M) der Ausnehmung (4) angeordnet sind.

10. Spannvorrichtung nach einem der vorhergehenden Ansprüche, **dadurch gekennzeichnet, daß** der Einsteckbereich (5) des Zentrierbolzens (3) ein Polygonprofil aufweist.

11. Spannvorrichtung nach einem der vorhergehenden Ansprüche 4 bis 10, **dadurch gekennzeichnet, daß** die Profilkontur (18) des Zentrierbolzens (3) im Einsteckbereich (5) von einer Mehrzahl in Umfangsrichtung (X) aufeinander folgender Bogenabschnitte (19) gebildet wird und daß die Bogenabschnitte (19) der Profilkontur (18) des Zentrierbolzens (3) komplementär zu den Bogenabschnitten (13) der Innenkontur (8, 12) der Seitenwand des Spannflansches (2, 11) ausgebildet sind.

12. Spannflansch (2, 11) ausgebildet zur Verwendung bei einer Spannvorrichtung (1) nach einem der vorhergehenden Ansprüche 1 bis 11, mit einer Mehrzahl von Ausnehmungen (4) zur Aufnahme jeweils eines Zentrierbolzens (3), wobei eine die Ausnehmung (4) begrenzende Innenkontur (8, 12) einer Seitenwand des Spannflansches (2, 11) nicht kreisförmig ist.

13. Zentrierbolzen (3) ausgebildet zur Verwendung bei einer Spannvorrichtung (1) nach einem der vorhergehenden Ansprüche 1 bis 11, mit einem Einsteckbereich (5) zum lösbaren Einstecken in eine Ausnehmung (4) eines Spannflansches (2, 11) nach Anspruch 12, wobei eine Profilkontur (7, 18) des Zentrierbolzens (3) im Einsteckbereich (5) nicht kreisförmig ausgebildet ist.

## Claims

1. Clamping device (1) for clamping a vehicle wheel onto a shaft of a balancing machine, with a clamping flange (2, 11) and with a multiplicity of centring bolts (3), wherein the clamping flange (2, 11) has a multiplicity of holes (4) for receiving the centring bolts (3) and wherein each centring bolt (3) can be releasably inserted into a hole (4) by an insertion section (5), **characterized in that** a profile contour (7, 18) of the centring bolt (3) in the insertion section (5) and an inner contour (8, 12) of a sidewall of the clamping flange (2, 11) which delimits the hole (4) are of a non-circular shape and formed complementarily to each other in such a way that the centring bolt (3), after insertion into a hole (4), is accommodated in the hole (4) in a manner in which it is rotatable in sections around its longitudinal axis (Y), wherein rotating the centring bolt (3) around its longitudinal axis (Y) results in the forming of a frictionally locking connection between at least one surface section (9, 14) of a circumferential surface of the centring bolt (3) in the insertion section (5) and at least one adjacent surface section (10, 16, 17) of the sidewall of the clamping flange (2, 11) which delimits the hole (4), and wherein the circumferential surface of the centring bolt (3) in the insertion section (5) and an adjacent circumferential surface of the sidewall of the clamping flange (2, 11) in the region of the hole (4) are formed as interacting contact surfaces or contact bevels which, by rotating the centring bolt (3) around its longitudinal axis, enter into mutual engagement and ensure a frictionally locking connection, acting in the axial and circumferential directions, between the centring bolt (3) and the clamping flange (2, 11) after reaching a predetermined angle of rotation.

2. Clamping device according to Claim 1, **characterized in that** the angle of rotation (α1, α2) of the centring bolt (3) in the hole (4), which is necessary for forming a frictionally locking connection, is dependent upon the wear state of the surface sections (9, 10, 14, 16, 17) which form the frictionally locking connection.

3. Clamping device according to Claim 1 or 2, **characterized in that** the angle of rotation (α1) of the centring bolt (3) in a new state of the clamping device corresponds approximately to half the maximum possible angle of rotation (α2) for forming a frictionally locking connection in a wear state of the clamping device.

4. Clamping device according to one of the preceding claims, **characterized in that** the inner contour (8, 12) of the sidewall of the clamping flange (2, 11) is formed by a multiplicity of arcuate sections (13) arranged consecutively in the circumferential direction (X), wherein the centre point (M) of the hole (4) is located inside the hole (4) and wherein the distance between the middle point (M) of the hole (4) and at least two points on the inner contour (8, 12), which are spaced apart in a circumferential direction (X) of an arcuate section (13), is of a different size.

5. Clamping device according to Claim 4, **characterized in that** the distance between the centre point (M) of the hole (4) and the inner contour (8, 12) steadily decreases over the length of an arcuate section (13) in a circumferential direction (X) from a start point (S) on the inner contour (8, 12), with a greatest distance to the centre point (M) of the hole (4) in the region of an arc start, to an end point (E) on the inner contour (8, 12), with a smallest distance to the centre point (M) of the hole (4) in the region of an arc end.

6. Clamping device according to Claim 4 or 5, **characterized in that** the distance between the centre point (M) of the hole (4) and the inner contour (8, 12) steadily increases from a starting point (A) of the arcuate section (13) to the start point (S).

7. Clamping device according to one of the preceding Claims 4 to 6, **characterized in that** all the arcuate sections (13) have the same arcuate progression.

8. Clamping device according to one of the preceding Claims 4 to 7, **characterized in that** the end point (E) of a first arcuate section (13) and the starting point (A) of a second arcuate section (13) following in the circumferential direction (X) have the same distance to the centre point (M) of the hole (4).

9. Clamping device according to one of the preceding Claims 4 to 8, **characterized in that** each arcuate section (13) is formed as a circular arc in the region between the start point (S) and the end point (E), wherein the centre points (m1, m2, m3) of the circular arcs are arranged in an offset manner in relation to each other and offset in relation to the centre point (M) of the hole (4).

10. Clamping device according to one of the preceding claims, **characterized in that** the insertion section (5) of the centring bolt (3) has a polygonal profile.

11. Clamping device according to one of the preceding Claims 4 to 10, **characterized in that** the profile contour (18) of the centring bolt (3) in the insertion section (5) is formed by a multiplicity of arcuate sections (19) arranged consecutively in the circumferential direction (X), and **in that** the arcuate sections (19) of the profile contour (18) of the centring bolt (3) are formed complementarily to the arcuate sections (13) of the inner contour (8, 12) of the sidewall of the clamping flange (2, 11),

12. Clamping flange (2, 11) designed for use in a clamping device (1) according to one of the preceding Claims 1 to 11, with a multiplicity of holes (4) for receiving a centring bolt (3) in each case, wherein an inner contour (8, 12) of a sidewall of the clamping flange (2, 11), which delimits the hole (4), is of a non-circular shape.

13. Centring bolt (3) designed for use in a clamping device (1) according to one of the preceding Claims 1 to 11, with an insertion section (5) for releasably inserting into a hole (4) of a clamping flange (2, 11) according to Claim 12, wherein a profile contour (7, 18) of the centring bolt (3) in the insertion section (5) is of a non-circular shape.

## Revendications

1. Dispositif de serrage (1) pour le blocage d'une roue de véhicule sur l'arbre d'une machine à équilibrer, comportant une bride de serrage (2, 11) et comportant une pluralité de boulons de centrage (3), sachant que la bride de serrage (2, 11) comporte une pluralité de cavités (4) servant à loger les boulons de centrage (3) et sachant que chaque boulon de centrage (3) peut être enfiché de manière amovible dans une cavité (4), par une zone d'enfichage (5), **caractérisé en ce qu'**un contour profilé (7, 18) du boulon de centrage (3) dans la zone d'enfichage (5) et un contour interne (8, 12) d'une paroi latérale, délimitant la cavité (4), de la bride de serrage (2, 11) ne sont pas réalisés de manière circulaire et sont complémentaires de telle sorte que le boulon de centrage (3) soit logé, après enfichage dans une cavité (4), de façon à pouvoir tourner partiellement autour de son axe longitudinal (Y), sachant qu'il apparaît, du fait de la rotation du boulon de centrage (3) autour de son axe longitudinal (Y), une liaison par friction entre au moins un segment de surface (9, 14) d'une surface circonférentielle du boulon de centrage (3) dans la zone d'enfichage (5) et au moins un segment de surface adjacent (10, 16, 17) de la paroi latérale, délimitant la cavité (4), de la bride de serrage (2, 11) et sachant que la surface circonférentielle du boulon de centrage (3) dans la zone d'enfichage (5) et une surface circonférentielle adjacente de la paroi latérale de la bride de serrage (2, 11) sont réalisées au niveau de la cavité (4) en tant que surfaces de réception concourantes ou chanfreins de réception concourants qui s'engrènent mutuellement par la rotation du boulon de centrage (3) autour de son axe longitudinal et assurent une liaison par friction agissant dans un sens axial et circonférentiel entre le boulon de centrage (3) et la bride de serrage (2, 11) après qu'un angle de rotation prédéfini a été atteint.

2. Dispositif de serrage selon la revendication 1, **caractérisé en ce que** l'angle de rotation (α1, α2), requis pour réaliser une liaison par friction du boulon de centrage (3) dans la cavité (4), dépend de l'état d'usure des segments de surface (9, 10, 14, 16, 17) formant la liaison par friction.

3. Dispositif de serrage selon la revendication 1 ou 2, **caractérisé en ce que** l'angle de rotation (α1) du boulon de centrage (3) correspond, lorsque le dispositif de serrage est à l'état neuf, à environ la moitié de l'angle de rotation (α2) maximal possible pour la formation d'une liaison par friction lorsque le dispositif de serrage est dans un état usé.

4. Dispositif de serrage selon l'une quelconque des revendications précédentes, **caractérisé en ce que** le contour interne (8, 12) de la paroi latérale de la bride de serrage (2, 11) est formé d'une pluralité de segments arqués (13) se suivant dans le sens circonférentiel (X), sachant que le centre (M) de la cavité (4) se trouve à l'intérieur de la cavité (4) et sachant que la distance entre le centre (M) de la cavité (4) et au moins deux points, situés sur le contour interne (8, 12), espacés dans un sens circonférentiel (X) d'un segment arqué (13), est différent.

5. Dispositif de serrage selon la revendication 4, **caractérisé en ce que** l'espace entre le centre (M) de la cavité (4) et le contour interne (8, 12) diminue continuellement sur la longueur d'un segment arqué (13), dans un sens circonférentiel (X), et ce, d'un point de départ (S) se trouvant sur le contour interne (8, 12), avec l'espace le plus important par rapport au centre (M) de la cavité (4) au niveau d'un début d'arc, jusqu'à un point final (E) se trouvant sur le contour interne (8, 12), avec un espace le plus faible par rapport au centre (M) de la cavité (4) au niveau d'une fin d'arc.

6. Dispositif de serrage selon la revendication 4 ou 5, **caractérisé en ce que** la distance entre le centre (M) de la cavité (4) et le contour interne (8, 12) augmente continuellement d'un point de départ (A) du segment arqué (13) au point de départ (S).

7. Dispositif de serrage selon l'une quelconque des revendications précédentes 4 à 6, **caractérisé en ce que** tous les segments arqués (13) présentent la même allure.

8. Dispositif de serrage selon l'une quelconque des revendications précédentes 4 à 7, **caractérisé en ce que** le point final (E) d'un premier segment arqué (13) et le point de départ (A) d'un second segment arqué (13), suivant dans le sens circonférentiel (X), présentent la même distance par rapport au centre (M) de la cavité (4).

9. Dispositif de serrage selon l'une quelconque des revendications précédentes 4 à 8, **caractérisé en ce que** chaque segment arqué (13) est réalisé sous forme d'arc de cercle dans une zone située entre le point de départ (S) et le point final (E), sachant que les centres (m1, m2, m3) des arcs de cercle sont agencés en décalage les uns par rapport aux autres et en décalage par rapport au centre (M) de la cavité (4).

10. Dispositif de serrage selon l'une quelconque des revendications précédentes, **caractérisé en ce que** la zone d'enfichage (5) du boulon de centrage (3) présente un profil polygonal.

11. Dispositif selon l'une quelconque des revendications précédentes 4 à 10, **caractérisé en ce que** le contour profilé (18) du boulon de centrage (3) est formé, dans la zone d'enfichage (5), d'une pluralité de segments arqués (19) se suivant dans le sens circonférentiel (X) et **en ce que** les segments arqués (19) du contour profilé (18) du boulon de centrage (3) sont réalisés de manière complémentaire aux segments arqués (13) du contour interne (8, 12) de la paroi latérale de la bride de serrage (2, 11).

12. Bride de serrage (2, 11) conçue pour être utilisée dans un dispositif de serrage (1) selon l'une quelconque des revendications précédentes 1 à 11, comportant une pluralité de cavités (4) destinées à loger chacune un boulon de centrage (3), sachant qu'un contour interne (8, 12), délimitant la cavité (4), d'une paroi latérale de la bride de serrage (2, 11) n'est pas circulaire.

13. Boulon de centrage (3) conçu pour être utilisé dans un dispositif de serrage (1) selon l'une quelconque des revendications précédentes 1 à 11, comportant une zone d'enfichage (5) pour un enfichage amovible dans une cavité (4) d'une bride de serrage (2, 11) selon la revendication 12, sachant qu'un contour profilé (7, 18) du boulon de centrage (3) n'est pas réalisé de manière circulaire dans la zone d'enfichage (5).
